**Europäisches Patentamt**

**European Patent Office**

**Office européen des brevets**

(19)

(11) **EP 1 120 665 A2**

(12) **EUROPÄISCHE PATENTANMELDUNG**

(43) Veröffentlichungstag:
   **01.08.2001  Patentblatt 2001/31**

(51) Int Cl.⁷: **G01S 1/04**, G01S 5/14,
   G01C 21/16

(21) Anmeldenummer: **01100705.1**

(22) Anmeldetag: **12.01.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **28.01.2000  DE 10003672**

(71) Anmelder: **Bodenseewerk Gerätetechnik GmbH 88662 Überlingen (DE)**

(72) Erfinder: **Mangold, Ulrich, Dr.
   79117 Freiburg (DE)**

(74) Vertreter: **Weisse, Jürgen, Dipl.-Phys. et al Patentanwälte,
   Dipl.-Phys. Jürgen Weisse,
   Dipl.-Phys. Dr. Ing. Renate Weisse,
   Bökenbusch 41
   42555 Velbert (DE)**

(54) **Navigationssystem**

(57)    Ein Navigationssystem enthält einen Satellitennavigations (GPS)-Empfänger (12) der Satellitennavigationsdaten liefert und eine Trägheitsmeßeinheit (34,38). Daten des Satellitennavigations-Empfängers (12) werden mit Daten der Trägheitsmeßeinheit (34,38) zur Bildung von Navigationsdaten in einem Kalman-Filter (42) integriert. Der Satellit enthält Mittel zur kontrollierten Modifikation der Satellitennavigationsdaten und der Satellitennavigations-Empfänger (12) enthält einen Dekodierbaustein (60), durch welchen nach vorgegebenen Algorithmen die modifizierten Satellitennavigationsdaten dekodierbar sind. Navigationsdaten der Trägheitsmeßeinheit (34,38) sind zur Stützung auf den Satellitennavigations-Empfänger (12) aufgeschaltet. Aus Gründen der Sicherheit der hochgenauen Satellitendaten gegen Nutzung durch Unbefugte ist der Dekodierbaustein (60) zur Durchführung von Rechenoperationen für das Kalman-Filter (42) eingerichtet, bei denen decodierte Satellitennavigationsdaten verwendet werden, und zur Ausgabe von daraus resultierenden Daten an das Kalman-Filter (42), wobei diese ausgegebenen Daten solcher Art sind, daß daraus die dekodierten Daten selbst nicht rekonstruiert werden können.

**EP 1 120 665 A2**

## Beschreibung

### Technisches Gebiet

Die Erfindung betrifft ein Navigationssystem mit einem Satellitennavigations (GPS-) Empfänger der Satellitennavigationsdaten liefert und einer Trägheitsmeßeinheit , bei welchem Daten des Satellitennavigations-Empfängers mit Daten der Trägheitsmeßeinheit zur Bildung von Navigationsdaten in einem Kalman-Filter integriert werden, wobei der Satellit Mittel zur kontrollierten Modifikation der Satellitennavigationsdaten und der Satelilitennavigations-Empfänger, einen Dekodierbaustein enthält, durch welchen nach vorgegebenen Algorithmen die modifizietrten Satellitennavigationsdaten dekodierbar sind, und bei welchem Navigationsdaten der Trägheitsmeßeinheit zur Stützung auf den Satellitennavigations-Empfänger aufgeschaltet sind.

### Stand der Technik

Es gibt Satellitennavigations-Systeme, z.B. GPS (Global Positioning System). Das sind Funkmeßsysteme. Eine Mehrzahl von Navigationssatelliten befinden sich in Erdumlaufbahnen. Die Navigationssatelliten liefern Impulsmuster in einem vorgegebenen Rhythmus. Ein Satellitenempfänger empfängt einerseits diese Impulsmuster, zum anderen enthält der Satellitenempfänger eine Einrichtung zur Erzeugung gleichartiger Impulsmuster, die als "Referenz-Impulsmuster" dienen. Die empfangenen Impulsmuster erscheinen am Satellitennavigations-Empfänger zu Zeitpunkten, die gegenüber dem Aussendezeitpunkt um ein vom Abstand zwischen Satelliten und Satellitennavigations-Empfänger abhängiges Zeitintervall verschoben ist. Regelkreise im Satellitennavigation-Empfänger bewirken eine Zeiztverschiebung des Referenz- Impulsmusters so, daß es mit dem empfangenen Impulsmusters zeitlich zur Deckung kommt. Diese Zeitverschiebung des Referenz-Impulsmusters liefert ein Maß für die Entfernung zum Satelliten. Wenn auf diese Weise die Entfernung zu mehreren gleichzeitig beobachtbaren Satelliten bestimmt worden ist, dann kann daraus die Position des Satellitennavigations-Empfängers relativ zu den Satelliten bestimmt werden. Mit einer geringeren Übertragungsrate übermitteln die Satelliten auch jeweils ihre eigene Position, so daß eine genaue Bestimmung der Position des Satellitennavigations-Empfängers in geographischer Koordinaten möglich ist.

Satellitennavigations-Systeme der beschriebenen Art gestatten eine Positionsbestimmung mit einer Genauigkeit im Meterbereich. Diese Möglichkeit der Positionsbestimmung mit solch hoher Genauigkeit bietet große Vorteile im militärischen Bereich. Es ist höchst unerwünscht, daß auch andere Mächte sich dieses Vorteils bedienen können. Andererseits besteht ein Bedürfnis, ein solches Satellitennavigations-System auch für zivile Zwecke, z.B. für die Navigation von Schiffen oder Fahrzeugen, zu nutzen. Aus diesem Grunde sind die von dem Satelliten gelieferten Signale nach bestimmten Algorithmen modifiziert, so daß sie bei Verarbeitung der Signale nach der oben beschriebenen Methode Positionsdaten nur mit einer Genauigkeit in der Größenordnung von hundert Metern liefert. Das ist für die meisten zivilen Anwendungen ausreichend. Für militärische Anwendungen enthält der Sartellitennavigations-Empfänger einen zusätzlichen Dekodierbaustein, mittels dessen die -bekannte- Modifikation der Satellitensignale und die damit verbundene Unsicherheit der Navigationsdaten kompensiert werden kann. Ein mit einem solchen Dekodierbaustein versehener Satellitennavigation-Empfänger liefert dann die hochgenauen Navigationsdaten.

Die so enthaltenen hochgenauen Navigationsdaten unterliegen strenger militärischer Geheimhaltung und sind nur für ganz spezielle, genau nachzuprüfende Zwecke verfügbar. Wenn jemand die hochgenauen Positionsdaten der Satellitennavigation zur Verfügung hätte so könnte er durch Vergleich mit den modifizierten Daten die Art der Modifikation rekonstruieren. Es ist weiterhin die Positionsbestimmung mittels einer Trägheitsmeßeinheit (IMU) bekannt. Diese Trägheitsmeßeinheit liefert Positionssignale aus Beschleunigungs- und Drehgeschwindigkeits-Signalen, die von Inertialsensoren (Beschleunigungsmessern und Kreiseln oder anderen Drehratensensoren) geliefert werden.

Beide Arten von Navigation haben Vor- und Nachteile; die Positionsdaten der Satellitennavigation sind genauer als die durch Trägheitsnavigation gewonnenen Positionsdaten. Der Fehler der mit Satellitennavigation gewonnenen Daten ist 'im wesentlichen konstant. Die Daten von der Satellitennavigation sind jedoch nicht ständig und überall verfügbar. Die Signale von den Satelliten können z.B. durch Hindernisse abgeschattet sein. Die Daten aus der Trägheitsnavigation sind ständig verfügbar. Sie werden autonom erzeugt. Nachteilig ist jedoch, daß die Fehler mit der Zeit anwachsen. Die Navigationsdaten "laufen weg", wenn sie nicht gestützt werden.

Es ist daher bekannt, die von einem Satellitennavigations-Empfängers und die von einer Trägheitsmeßeinheit erhaltenen Daten mittels eines Kalman-Filters zu integrieren, d.h. anhand eines Fehlermodells aus den Daten beider Navigations-Einrichtungen einen optimalen Schätzwert für die Navigationsdaten zu gewinnen.

Ein weiteres Zusammenwirken von Satellitennavigations-Empfänger und Trägheitsnavigationseinheit besteht in folgendem: Bei hochdynamischen Systemen mit hoher Beschleunigung und hoher Geschwindigkeit versagt das Satellitennavigations-System. Die Regelkreise, welche das Referenz-Impulsmuster dem empfangenen Impulsmuster nachführt, sind zu träge. Das führt bei hochdynamischen Systemen zu Regelschwingungen. Durch das Trägheitsnavigations-System kann eine Stützung des Satellitennavigations-Systems erfolgen.. Das Trägheitsnavigations-System erhält die wenigstens ungefähre Position und kann bei schnellen Änderungen das Referenz-Impulsmuster wenigstens ungefähr aber schnell dem empfangenen Impulsmuster nachführen, was die genaue Regelung beschleunigt und verbessert. Es werden somit schon nach dem Stand der Technik Signale von der Trägheitsmeßeinheit auf den Satellitennavigations-Empfänger aufgeschaltet.

**Offenbarung der Erfindung**

Der Erfindung liegt die Aufgabe zu Grunde, ein Navigationssystem mit einem Satellitennavigations-Empfängers und einer Trägheitsmeßeinheit , deren Daten mittels eines Kalman-Filters zur Bildung von Navigationsdaten integriert sind, so auszubilden, daß eine den Möglichkeiten des Satellitennavigationssystems voll entsprechende Genauigkeit der Navigationsdaten erreichbar ist, ohne daß Informationen, die Rückschlüsse auf die Modifikation der Satellitensignale zuläßt, aus einem gesicherten Hardwarebereich herausgelangt.

Erfindungsgemäß wird diese Aufgabe dadurch gelöst, daß der Dekodierbaustein zur Durchführung von Rechenoperationen des Kalman-Filters eingerichtet ist, bei denen decodierte Satellitennavigationsdaten verwendet werden, und zur Ausgabe von daraus resultierenden Daten an das Kalman-Filter, wobei diese ausgegebenen Daten solcher Art sind, daß daraus die dekodierten Daten selbst nicht rekonstruiert werden können

Bei einem solchen Navigationssystem werden zwar Rechenoperationen mit den hochgenauen, dekodierten Daten der Satellitennavigation durchgeführt. Dies geschieht aber innerhalb des "gesicherten" Hardwarebereichs des Dekodierbausteins. Aus diesem gesicherten Hardwarebereich werden nur verarbeitete Daten ausgegeben, aus denen die ursprünglichen dekodierten Daten nicht mehr rekonstruierbar sind.

Zur Erzeugung von Schätzwerten der Navigationsdaten dienen Kalman-Filter. Diese Kalman-Filter (extended Kalman filter) verarbeiten jeweils Differenzen der gemessenen Werte und der nach einer Meßmatrix aus dem Zustandsvektor berechneten Werte. Diese Differenzen können in dem Dekodierbaustein gebildet und dem Kalman-Filter zugeführt werden. Die Differenzen gestatten keine Rückschlüsse auf die von dem Dekodierbaustein aus den Satellitensignalen rück-korrigierten, geheimen Meßgrößen.

Ein Ausführungsbeispiel der Erfindung ist nachstehend unter Bezugnahme auf die zugehörige Zeichnung näher erläutert.

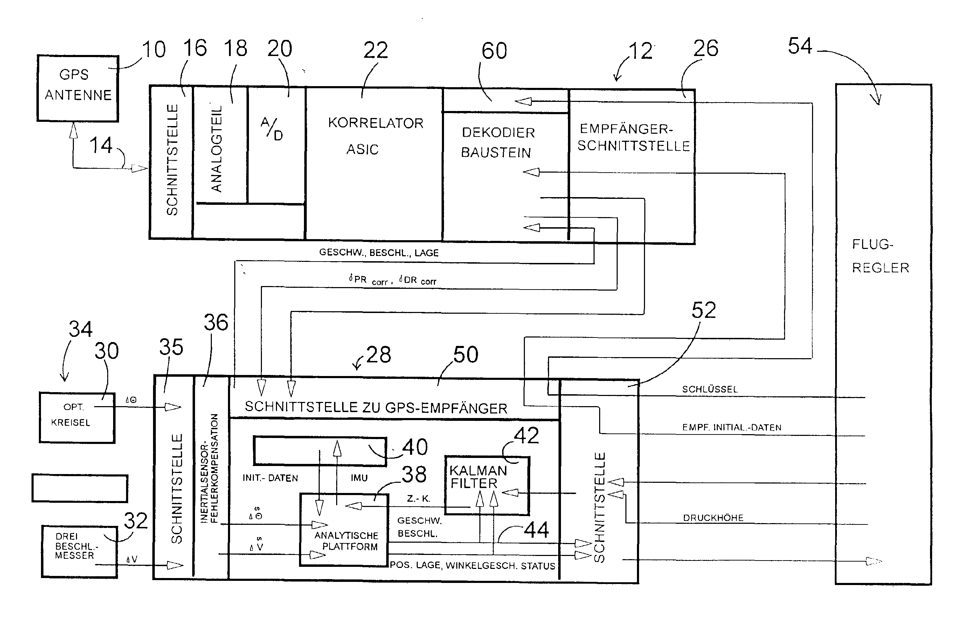

**Beschreibung der Zeichnung**

In der Zeichnung ist mit 10 eine Antenne eines Satellitennavigations-Empfängers (GPS-Empfängers) 12 bezeichnet. Die Antenne 10 ist mit dem Satellitennavigations-Empfänger 12 über ein Kabel 14 und eine Schnittstelle 16 verbunden. Der Satellitennavigations-Empfänger 12 enthält einen Analogteil 18, einen Analog-Digital-Wandler 20 und einen Korrelator 22. Der Korrelator 22 ist in Form von ASICs aufgebaut. Weiterhin enthält der Satellitennavigations-Empfänger 12 einen Taktgeber, d.h. eine Uhr 24. Über eine Schnittstelle 26 ist der Satellitennavigations-Empfänger 12 mit einem Integrations-Mikroprozessor 28 verbunden.

Der Integrations-Mikroprozessor erhält Eingangssignale von Trägheitssensoren in Form von Winkelinkrementen $\Delta\Theta$ und Geschwindigkeitsinkrementen $\Delta v$ von Kreiseln 30 und Beschleunigungsmessern 32. Die Kreisel 30 und Beschleunigungsmesser 32 sind strukturfest (strap-down) in einer Trägheitsmeßeinheit 34 angeordnet. Der Integrations-Mikroprozessor 28 erhält die Daten von den Trägheitssensoren 30 und 32 über eine Schnittstelle 34. Mit 36 sind Korrekturmittel zur Fehlerkorrektur der Trägheitssensoren 30 und 32 , also zur Kompensation von Ausrichtfehlern usw. bezeichnet. Die so kompensierten Inertialsignale $\Delta\breve{\Theta}$ und $\Delta\breve{v}$ sind auf eine "analytische Plattform" 38 geschaltet. Dort erfolgt in bekannter Weise eine Umrechnung der strukturfest gemessenen Meßgrößen in ein erdfestes Referenzsystem. Durch Ausrichtmittel 40 werden Initialisierungsdaten auf die analytische Plattform aufgeschaltet, durch welche eine Anfangsausrichtung dieser analytischen Plattform erfolgt.

Mit 42 ist ein Kalman-Filter (extended integration Kalman filter) bezeichnet, mittels dessen die Daten der analytischen Plattform 38, die auf das Kalman-Filter 42 gemäß Verbindung 44 aufgeschaltet sind, mit Daten integriert werden, die von dem Satellitennavigations-Empfänger 12 über Verbindungen 46 und 48 und eine Schnittstelle 50 zum Satellitennavigations-Empfänger 12 erhalten werden.

Das Kalman-Filter 42 liefert Schätzwerte der Navigationsdaten über eine Schnittstelle an einen Flugregler-Abschnitt 54. Das Kalman-Filter erhält weiterhin über die Schnittstelle 52 an einem Eingang 56 die Druckhöhe.

Zur Stützung des Korrelators 28, wie eingangs beschrieben, in dem Satellitennavigations-Empfänger 12 liefert der Integrations-Mikroprozessor 28 Positions- und Geschwindigkeits- Beschleunigungssignale an den Satellitennavigations-Empfänger. Das ist durch die Verbindung 58 dargestellt.

Um die Nutzung der hochgenauen Signale der Satellitennavigation durch Unbefugte zu vermeiden, sind die von den Satelliten ausgesandten Satellitensignale nach bestimmten Algorithmen modifiziert. Der Satellit liefert z.B. nicht seine genaue Position sondern eine etwas verfälschte Position. Die Satellitensignale liefern nicht den genauen Abstand zum Satelliten sondern einen etwas verfälschten Abstand. Die Modifikation der Satelliten Signale ist zudem zeitabhängig. Ein nur aus den Bauteilen 16, 18, 20, 22, 24 und 26 aufgebauter Satellitennavigations-Empfänger, wie er für zivile Anwendungen verfügbar ist, liefert daher die Navigationsdaten nur mit einer eingeschränkten Genauigkeit. Wenn die Navigationsdaten von dem Satellitennavigations-Empfänger mit der möglichen hohen Genauigkeit erhalten werden sollen, dann muß der Satellitennavigations-Empfänger einen Dekodierbaustein 60 enthalten. Dieser Dekodierbaustein kompensiert die bekannten Modifikationen der Satellitensignale, so daß an der Verbindung oder dem Ausgang 46 die korrigierten, hochgenauen Rohdaten Abstand $PR_{corr}$ zum Satelliten, Abstandsänderung $Dr_{corr}$, Satellitenposition $x_{corr}^{SV}$, und Änderung der Satellitenposition $\dot{x}_{corr}^{SV}$ zur Verfügung stehen. Diese würden dann bei üblicher Anwendung auf das Kalman-Filter 42 aufgeschaltet und in diesem mit verarbeitet.

Das macht es erforderlich, die durch die Dekodierung erhaltenen hochgenauen Rohdaten des Satellitennavigations-Empfängers aus dem gesicherten Bereich heraus auszugeben. Diese Daten, die Rückschlüsse auf die Art der "Verfälschung" oder Modifikation der Satellitensignale zulassen, unterliegen jedoch strenger Geheimhaltung. Die Verwendung dieser Daten muß daher genau kontrolliert und überwacht werden.

Aus diesem Grund erfolgt bei dem vorliegenden Satellitennavigations-Empfänger ein Teil der Verarbeitung der Signale innerhalb des "gesicherten Bereichs" des Dekodierbausteins 60, so daß dieser nur Daten ausgibt, die für das Kalman-Filter 42 erforderlich sind, aber keine Rückrechnung auf die Art der Verfälschung der Satellitensignale gestatten.

Mathematisch ergibt sich folgendes:

Der mit dem Uhrenfehler τ behaftete Entfernungsmeßwert $PR_{corr}$ (pseudo-range), der von dem mit Dekodierbaustein 60 versehenen Satellitennavigations-Empfänger normalerweise geliefert wird, ist

$$Pr_{corr}(t) = \rho_{corr}(t) + c\tau = \left| x_{-corr}^{SV}(t) - x_R(t) \right| + c\tau(t)$$

Darin ist $\rho_{corr}$ der tatsächliche Abstand des Satelliten von dem Satellitennavigations-Empfänger, $x_{-corr}^{SV}$ die tatsächliche Position des Satelliten, $x_R$ die unbekannte, dreidimensionale Position der Antenne des Satellitennavigations-Empfängers, c die Lichtgeschwindigkeit und τ der unbekannte Uhrenfehler des Satellitennavigations-Empfängers. Davon sind $PR_{corr}$, und $x_{-corr}^{SV}$ geheimhaltungsbedürftig und sollten nach der Erfindung nicht aus einem gesicherten Hardwarebereich heraus ausgegeben werden. Das ist die Meßgleichung.

Die tatsächliche Position $x_R$ der Antenne 10 des Sattellitennavigations-Empfängers 12 entspricht annähernd der von der Trägheitsmeßeinheit 34 und der analytischen Plattform 38 gelieferten Position $x_{R,0}$. Die Differenzen der Koordinaten sind klein. Man kann daher für die vorstehende Gleichung eine Taylor-Reihe erster Ordnung um $x_{R,0}$ ansetzen:

$$PR_{corr}(t) = \left| x_{-corr}^{SV}(t) - x_{-R,0} \right| +$$

$$+ \frac{x_{corr}^{SV}(t) - x_{R,0}(t)}{\left| x_{-corr}^{SV}(t) - x_{-R,0}(t) \right|} (x_R - x_{R,0}) +$$

$$+ \frac{y_{corr}^{SV} - y_{R,0}(t)}{\left| x_{-corr}^{SV}(t) - x_{-R,0}(t) \right|} (y_R - y_{R,0}) +$$

$$+ \frac{z_{corr}^{SV}(t) - z_{R,0}(t)}{\left| x_{-corr}^{SV}(t) - x_{-R,0} \right|} (z_R - z_{R,0})$$

Dabei sind $x_{corr}^{SV} y_{corr}^{SV}$ und $z_{corr}^{SV}$ die wahren Koordinaten des Satelliten, $x_{R,0}$, $y_{R,0}$ und $z_{R,0}$ die Koordinaten der Antenne 10, gemessen mittels der Trägheitsmeßeinheit 34 und der analytischen Plattform 38. Der Betrag der Vektordifferenzen ist ein Wurzelausdruck, nämlich die Wurzel aus der Summe der Quadrate der Koordinatendifferenzen. Die Quotienten in der Gleichung stellen die Richtungskosinus-Elemente für die Richtung von der Antenne 10 zum Satelliten dar.

Für das Kalman-Filter 42 relevant ist die Differenz

$$PR_{corr}(t) - \left| \underline{x}_{corr}^{SV}(t) - \underline{x}_{R,0} \right| .$$

Das ist die Differenz der gemessenen Größe $PR_{corr}$ und der unter Annahme eines ersten Schätzwertes der gesuchten Position, nämlich $\underline{x}_{R,0}$ berechneten Größe. Diese Differenz kann in dem Dekodierbaustein 60 berechnet und von diesem ausgegeben werden. Der Dekodierbaustein 60 erhält diese Daten sowieso über Verbindung 58 zur Stützung der Korrelation des Satellitennavigations-Empfängers 12. Aus dieser Differenz mit einem Wurzelausdruck und einer Quadratsumme können die geheimen Daten $PR_{corr}$ und $\underline{x}_{corr}^{SV}$ nicht mehr rekonstruiert werden.

Die Brüche auf der rechten Seite der obigen Meßgleichung sind die Komponenten des vom Satellitennavigations-Empfänger zum Satelliten zeigenden Einheitsvektors und somit die Richtungskosinus-Elemente der Meßmatrix. Auch diese Richtigkosinus-Elemente können in dem Dekodierbaustein 60 berechnet werden. Die so ausgegebenen Richtungskosinus-Elemente lassen ebenso keinen Rückschluß auf die geheimzuhaltenden Algorithmen zu, mit denen die Satellitensignale zeitabhängig verfälscht werden. Auch diese Richtungskosinus-Elemente der Meßmatrix sind auf das Kalman-Filter 42 aufgeschaltet.

Durch Anpeilen von wenigstens vier Satelliten liefert das Kalman-Filter 42 optimale Schätzwerte für die vier Unbekannten $x_R$, $y_R$, $z_R$ und $\tau$.

Eine Vereinfachung ist dadurch möglich, daß statt der korrigierten Satellitendaten die nicht-klassifizierten unkorrigierten, jedoch verfälschten Daten für die Berechnung der Richtungskosinus-Elemente verwendet wird. Angesichts der großen Höhe des Satelliten sind die dabei auftretenden Fehler numerisch vernachlässigbar.

Weiterhin benötigt wird die Änderung des korrigierten Abstandes $PR_{corr}$, also die Differenz des Abstandes in zwei aufeinanderfolgenden Zeitpunkten $t_1$ und $t_2$. Diese Differenz ("Deltarange") unterliegt ebenfalls der Geheimhaltung und ist

$$DR_{corr}(t_1,t_2) = \rho_{corr}(t_1) - \rho_{corr}(t_2) + c\tau(t_2) - c\tau(t_1).$$

Wenn $t_2 - t_1 \leq 1$ sec. ist, dann kann ohne wesentlichen Einfluß auf die Genauigkeit der Position des Satelliten zum Zeitpunkt $t_2$ angesetzt werden:

$$\underline{x}_{corr}^{SV}(t_2) = \underline{x}_{corr}^{SV}(t_1) + \int_{t=t_1}^{t_2} \underline{\dot{x}}_{corr}^{SV}(t)dt \approx \underline{x}_{corr}^{SV}(t_1) + \underline{\dot{x}}_{corr}^{SV}(t_1)(t_2 - t_1)$$

und in ähnlicher Weise

$$\tau(t_2) \approx \tau(t_1) + \dot{\tau}(t_1)(t_2 - t_1).$$

Auch hier kann man eine Taylor-Reihe um die durch die Trägheitsmeßeinheit 34 und die analytische Plattform 38 gelieferte Position der Antenne 10 herum bilden. Bezeichnet mit $xDC_{corr}$, $yDC_{corr}$ und $zDC_{corr}$ die oben durch die Brüche dargestellten Richtungskosinus-Elemente und mit $\delta x_R$ usw. die Differenzen $(x_R - x_{R,0})$ usw., dann liefert die Taylor-Reihe in erster Ordnung:

$$DR_{corr}(t_1,t_2) - \rho_{0,corr}(t_2) + \rho_{0,corr}(t_1) =$$

$$\{xDC_{corr}(t_2) - xDC_{corr}(t_1)\}\delta x_R +$$

$$\{yDC_{corr}(t_2) - yDC_{corr}(t_1)\}\delta y_R +$$

$$\{zDC_{corr}(t_2) - zDC_{corr}(t_1)\}\delta z_R +$$

$$xDC_{corr}(t_2)\,\delta \dot{x}_R(t_2 - t_1) +$$

$$yDC_{corr}(t_2)\,\delta \dot{y}_R(t_2 - t_1) +$$

$$zDC_{corr}(t_2)\ \delta\dot{z}_R(t_2 - t_1)+$$

$$c\dot{\tau}(t_1)(t_2 - t_1).$$

Davon können wieder der linke Teil der Gleichung von dem Delodierer 60 berechnet werden, der auch die Richtungskosinus-Elemente als Elemente der Meßmatrix berechnet. Ausgegeben werden nur Daten, aus denen keine Rückschlüsse auf die geheimhaltungsbedürftigen Daten, zu denen auch $DR_{corr}$ gehört, gezogen werden können. Auch hier können die Richtungskosinus-Elemente statt aus den korrigierten, geheimhaltungsbedürftigen Daten aus den unkorrigierten, ungenaueren Daten bestimmt werden, ohne wesentlichen Einfluß auf das Ergebnis.

Die so von dem Dekodierbaustein berechneten Daten sind ähnlich wie die Entfernungs-Daten auf das Kalman-Filter 42 geschaltet. Damit ergeben sich optimale Schätzwerte nicht nur für die Position sondern auch für die Geschwindigkeit des Satellitennavigations-Empfängers 12 und seines Trägers.

Die Integration von Daten eines Satellitennavigations-Empfängers (GPS-Empfängers) und einer Trägheitsmeßeinheit (IMU) ist an sich dem Fachmann geläufig und daher hier nicht im einzelnen beschrieben.


**Patentansprüche**

1.   Navigationssystem mit einem Satellitennavigations (GPS-)Empfänger (12) der Satellitennavigationsdaten liefert und einer Trägheitsmeßeinheit (34,38), bei welchem Daten des Satellitennavigations-Empfängers (12) mit Daten der Trägheitsmeßeinheit (34,38) zur Bildung von Navigationsdaten in einem Kalman-Filter (42) integriert werden, wobei der Satellit Mittel zur kontrollierten Modifikation der Satellitennavigationsdaten und der Satelilitennavigations-Empfänger (12) einen Dekodierbaustein (60) enthält, durch welchen nach vorgegebenen Algorithmen die modifizierten Satellitennavigationsdaten dekodierbar sind, und bei welchem Navigationsdaten der Trägheitsmeßeinheit (34,38) zur Stützung auf den Satellitennavigations-Empfänger (12) aufgeschaltet sind, **dadurch gekennzeichnet, daß** der Dekodierbaustein (60) zur Durchführung von Rechenoperationen für das Kalman-Filter (42) eingerichtet ist, bei denen decodierte Satellitennavigationsdaten verwendet werden, und zur Ausgabe von daraus resultierenden Daten an das Kalman-Filter (42), wobei diese ausgegebenen Daten solcher Art sind, daß daraus die dekodierten Daten selbst nicht rekonstruiert werden können.

2.   Navigationssystem nach Anspruch 1, **dadurch gekennzeichnet, daß** der Decodierbaustein (60) zur Bildung der Differenz des gemessenen, dekodierten Abstandes ($PR_{corr}$) und des aus den Positions-Koordinaten ($\underline{x}^{SV}_{corr}$) des Satelliten und den von der Trägheitsmeßeinheit (34,38) gelieferten Positions-Koordinaten ($\underline{x}_{R,0}$) des Empfängers (12) berechneten Abstandes eingerichtet ist, die dann an das Kalman-Filter (42) ausgegeben wird.

3.   Navigationssystem nach Anspruch 2, **dadurch gekennzeichnet, daß** der Dekodierbaustein (60) zur Berechnung der Komponenten ($xDC_{corr}$, $yDC_{corr}$, $zDC_{corr}$) eines vom Empfänger (12) zum Satelliten zeigenden Einheitsvektors berechnet aus den dekodierten Positions-Koordinaten ($\underline{x}^{SV}_{corr}$) des Satelliten und den von der Trägheitsmeßeinheit (34,38) gelieferten Positions-Koordinaten ($\underline{x}_{R,0}$) des Satellitennavigations-Empfängers (12) als Richtungskosinus-Elemente einer Meßmatrix eingerichtet ist, die dann an das Kalman-Filter (42) ausgegeben werden.

4.   Navigationssystem nach einem der Ansprüche 1 bis 3, **dadurch gekennzeichnet, daß** der Decodierbaustein (60) zur Bildung der Differenz ($DR_{corr}$) der Differenzen einerseits der zu zwei aufeinanderfolgenden Teitpunkten ($t_1,t_2$) gemessenen, dekodierten Abstände ($PR_{corr}$) und andererseits der zu diesen Zeitpunkten aus den Positions-Koordinaten ($\underline{x}^{SV}_{corr}$) des Satelliten und den von der Trägheitsmeßeinheit (34,38) gelieferten Positions-Koordinaten ($\underline{x}_{R,0}$) des Empfängers (12) berechneten Abstände eingerichtet ist.

FLUG-REGLER

54

26
12
EMPFÄNGER-SCHNITTSTELLE

60
DEKODIER BAUSTEIN

22
KORRELATOR ASIC

20
A/D

18
ANALOGTEIL

16
SCHNITTSTELLE

10
GPS ANTENNE

14

GESCHW., BESCHL., LAGE

$\delta PR_{corr}$ , $\delta DR_{corr}$

52

SCHLÜSSEL

EMPF. INITIAL.-DATEN

DRUCKHÖHE

SCHNITTSTELLE

50
SCHNITTSTELLE ZU GPS-EMPFÄNGER

42
KALMAN FILTER

44

40
IMU

38
ANALYTISCHE PLATTFORM

z.-K.

GESCHW. BESCHL.

POS. LAGE, WINKELGESCH. STATUS

INIT.- DATEN

$s\,\delta\Theta$

$s\,\delta V$

28

36
INERTIALSENSOR-FEHLERKOMPENSATION

35
SCHNITTSTELLE

34
30
OPT. KREISEL

$\delta\Theta$

32
DREI BESCHL.-MESSER

$\delta V$

7